# EUROPÄISCHE PATENTSCHRIFT

(11) **EP 3 704 752 B1**
(45) Veröffentlichungstag und Bekanntmachung des Hinweises auf die Patenterteilung: **23.02.2022**
(21) Anmeldenummer: 18789365.6
(22) Anmeldetag: 16.10.2018
(51) Int. Cl.: H01M 4/04, D21G 1/00, H01M 4/139

(54) **VERFAHREN UND VORRICHTUNG ZUR HERSTELLUNG EINES FUNKTIONSELEMENTS FÜR EINE ELEKTRODENEINHEIT EINER BATTERIEZELLE**
METHOD AND DEVICE FOR PRODUCING A FUNCTIONAL ELEMENT FOR AN ELECTRODE UNIT OF A BATTERY CELL
PROCÉDÉ ET DISPOSITIF DE FABRICATION D'UN ÉLÉMENT FONCTIONNEL POUR UNE UNITÉ D'ÉLECTRODE DE CELLULE DE BATTERIE

(30) Priorität: 30.10.2017 DE 102017219453
(43) Veröffentlichungstag der Anmeldung: 09.09.2020
(73) Patentinhaber: Robert Bosch GmbH, 70442 Stuttgart (DE)
(72) Erfinder: MAIER, Nicolas, 70435 Stuttgart (DE)
(86) Internationale Anmeldenummer: PCT/EP2018/078172
(87) Internationale Veröffentlichungsnummer: WO 2019/086241

(56) Entgegenhaltungen:
- DE-A1-102007 041 932
- JP-A- 2012 089 388
- US-A- 3 908 808

## Beschreibung

Die Erfindung betrifft ein Verfahren zur Herstellung eines Funktionselements für eine Elektrodeneinheit einer Batteriezelle, wobei mindestens ein Ausgangsmaterial bereitgestellt wird, und das Ausgangsmaterial in einem Kalander verdichtet wird. Die Erfindung betrifft auch eine Vorrichtung zur Herstellung eines Funktionselements für eine Elektrodeneinheit einer Batteriezelle, wobei die Vorrichtung einen Kalander mit mindestens zwei Walzen umfasst.

### Stand der Technik

Elektrische Energie ist mittels Batterien speicherbar. Batterien wandeln chemische Reaktionsenergie in elektrische Energie um. Hierbei werden Primärbatterien und Sekundärbatterien unterschieden. Primärbatterien sind nur einmal funktionsfähig, während Sekundärbatterien, die auch als Akkumulator bezeichnet werden, wieder aufladbar sind. Eine Batterie umfasst dabei eine oder mehrere Batteriezellen.

In einem Akkumulator finden insbesondere sogenannte Lithium-Ionen-Batteriezellen Verwendung. Diese zeichnen sich unter anderem durch hohe Energiedichten, thermische Stabilität und eine äußerst geringe Selbstentladung aus. Lithium-Ionen-Batteriezellen kommen unter anderem in Kraftfahrzeugen, insbesondere in Elektrofahrzeugen (Electric Vehicle, EV), Hybridfahrzeugen (Hybride Electric Vehicle, HEV) sowie Plug-In-Hybridfahrzeugen (Plug-In-Hybride Electric Vehicle, PHEV) zum Einsatz.

Lithium-Ionen-Batteriezellen weisen eine positive Elektrode, die auch als Kathode bezeichnet wird, und eine negative Elektrode, die auch als Anode bezeichnet wird, auf. Die Kathode sowie die Anode umfassen je einen Stromableiter, auf den ein Funktionselement aufgebracht ist, welches ein elektrochemisches Aktivmaterial aufweist. Das Aktivmaterial für die Kathode enthält beispielsweise ein Metalloxid wie Li₂MnO₃ oder eine NCM-Legierung, also eine Legierung aus Nickel, Cobald und Mangan. Das Aktivmaterial für die Anode enthält beispielsweise Silizium oder Graphit. Zwischen der Kathode und der Anode befindet sich als weiteres Element ein ionisch leitfähiger, elektrisch nichtleitender Separator, beziehungsweise Elektrolyt. Der Elektrolyt kann flüssig oder fest, beispielsweise Polymer, Glas oder Keramik sein.

Das Elektrodenmaterial des Funktionselements umfasst neben dem Aktivmaterial oft weitere Materialien, insbesondere eine elektronische Leitkomponente wie beispielweise Leitruß oder Graphit, sowie eine ionische Leitkomponente wie beispielweise einen flüssigen oder festen Elektrolyt. Zur mechanischen Stabilisierung des Elektrodenmaterials kann beispielweise ein Polymerbinder verwendet werden.

Das Funktionselement kann in einem Nassverfahren hergestellt werden. Dazu wird das Elektrodenmaterial als Pulver beispielsweise mit Bindern und Lösemitteln gemischt und beispielsweise auf den Stromableiter als dünne Schicht aufgebracht. Nach Trocknen des Elektrodenmaterials entsteht das Funktionselement direkt auf dem Stromableiter.

Das Funktionselement kann auch in einem Trockenverfahren hergestellt werden. Dazu wird aus dem vorbereiteten Elektrodenmaterial durch Verdichten, insbesondere Walzen oder Extrudieren, das Funktionselement hergestellt. Anschließend kann das Funktionselement durch Laminieren mit anderen Elementen, beispielsweise einem Separator oder einem Stromableiter, verbunden werden.

Aus der Druckschrift JP 2012-089388 ist ein Verfahren zur Herstellung einer Festkörperbatterie bekannt. Dabei werden die Funktionselemente der Festkörperbatterie diskontinuierlich in einer Presse hergestellt. Dabei wird pulverförmiges Material in der Presse verdichtet während gleichzeitig Ultraschallwellen auf das Material übertragen werden.

Unter anderem aus dem Artikel "Fartashvand et al., Ultrasonics Sonochemistry 36 (2017), 155-161" ist es bekannt, metallische oder keramische pulverförmige Materialien zu verpressen und während des Verpressens mit Ultraschallwellen zu bestrahlen.

Die Druckschrift JP 2003-168444 offenbart ein Verfahren zur Herstellung eines Separators für eine Brennstoffzelle. Dabei werden Graphitpulver und eine Polymermischung in einer Gussform geschmolzen und dabei mit Ultraschallwellen bestrahlt.

### Offenbarung der Erfindung

Es wird ein Verfahren zur Herstellung eines Funktionselements für eine Elektrodeneinheit einer Batteriezelle vorgeschlagen. Bei dem Funktionselement handelt es sich beispielsweise um eine anodische Aktivmaterialschicht, um eine kathodische Aktivmaterialschicht oder um eine Elektrolytschicht, beziehungsweise einen Separator. Das Funktionselement kann auch mehrere unterschiedliche Schichten umfassen.

Dabei wird mindestens ein Ausgangsmaterial bereitgestellt. Wenn es sich bei dem Funktionselement um eine Elektrolytschicht handelt, so umfasst das Ausgangsmaterial beispielsweise ein Glas oder eine Glaskeramik aus dem System Li₂S-P₂S₅ (gegebenenfalls mit Additiven oder Dotierstoffen), Perwoskit (z.B. Li-La-Ti-Oxid), Granat (z.B. Li-La-Zr-Oxid), keramische lonenleiter mit NaSICON oder LiSICON-Struktur (z.B. Li-Al-Ti-Phosphat) oder Argyrodite (z.B. halogenhaltige Li-P-Sulfide). Wenn es sich bei dem Funktionselement um eine kathodische Aktivmaterialschicht handelt, so umfasst das Ausgangsmaterial beispielsweise LCO (Li-Co-Oxid), NCM (Ni-Co-Mn-Oxid), NCA (Ni-Co-Al-Oxid), gegebenenfalls mit schützender Oberflächenbeschichtung, gemischt mit einem Li-Ionenleiter (Elektrolytmaterial) sowie einem elektrischen Leiter wie Kohlenstoff. Wenn es sich bei dem Funktionselement um eine anodische Aktivmaterialschicht handelt, so basiert es auf einem Aktivmaterial wie Kohlenstoff, Silizium oder Lithium, gegebenenfalls gemischt mit weiteren Bestandteilen (insbesondere elektrisches Leitmaterial, lonenleiter).

Das besagte Ausgangsmaterial zur Herstellung des Funktionselements wird anschließend in einem Kalander verdichtet. Der Kalander weist dabei bevorzugt mindestens zwei Walzen auf, welche gegenläufig rotieren. Das Ausgangsmaterial wird also insbesondere durch einen Walzvorgang zwischen den beiden rotierenden Walzen des Kalanders verdichtet.

Während des Verdichtens des Ausgangsmaterials werden Schallwellen oder Ultraschallwellen von dem Kalander in das Ausgangsmaterial zur Herstellung des Funktionselements übertragen. Die Schallwellen oder Ultraschallwellen werden beispielsweise von einem Schallwellen- oder Ultraschallwellengenerator erzeugt, der mit mindestens einer der Walzen des Kalanders in funktionaler Verbindung steht. Die Schallwellen oder Ultraschallwellen weisen bevorzugt einen Frequenzbereich zwischen 10 Hz und 1 GHz, besonders bevorzugt einen Frequenzbereich zwischen 1 MHz und 200 MHz, auf.

Gemäß einer vorteilhaften Ausgestaltung des Verfahrens wird das mindestens eine Ausgangsmaterial als Pulver, Mischung mehrerer Pulver oder Mischung eines oder mehrerer Pulver mit Zusatzstoffen, beispielsweise einem organischen Binder, bereitgestellt und dem Kalander zugeführt.

Gemäß einer anderen vorteilhaften Ausgestaltung des Verfahrens wird das mindestens eine Ausgangsmaterial als Folie, beispielsweise gegossen, gerakelt oder gedruckt aus einer Mischung von Pulvern mit organischen Hilfsstoffen wie Binder, Lösemittel, Dispergator und Ähnlichem, bereitgestellt und als Folie dem Kalander zugeführt.

Gemäß einer vorteilhaften Weiterbildung des Verfahrens wird mindestens ein weiteres Ausgangsmaterial bereitgestellt, wobei das erste Ausgangsmaterial und das weitere Ausgangsmaterial in dem Kalander derart verdichtet werden, dass das Funktionselement mindestens zwei unterschiedliche Schichten aufweist. Das weitere Ausgangsmaterial wird dabei auf das als Folie bereitgestellte erste Ausgangsmaterial aufgebracht und beide Ausgangsmaterialien werden gemeinsam dem Kalander zugeführt.

Vorzugsweise ist das weitere Ausgangsmaterial dabei unterschiedlich von dem ersten Ausgangsmaterial. Das derart hergestellte Funktionselement kann beispielsweise, je nach den verwendeten Ausgangsmaterialen, eine Elektrolytschicht und eine kathodische Aktivmaterialschicht umfassen. Das derart hergestellte Funktionselement kann auch beispielsweise, je nach den verwendeten Ausgangsmaterialen, eine Elektrolytschicht und eine anodische Aktivmaterialschicht umfassen.

Gemäß einer vorteilhaften Ausgestaltung des Verfahrens wird das mindestens eine weitere Ausgangsmaterial als Pulver, Mischung mehrerer Pulver oder Mischung eines oder mehrerer Pulver mit Zusatzstoffen, beispielsweise einem organischen Binder, bereitgestellt und gemeinsam mit dem als Folie bereitgestellten ersten Ausgangsmaterial dem Kalander zugeführt.

Gemäß einer anderen vorteilhaften Ausgestaltung des Verfahrens wird das mindestens eine weitere Ausgangsmaterial als Folie, beispielsweise gegossen, gerakelt oder gedruckt aus einer Mischung von Pulvern mit organischen Hilfsstoffen wie Binder, Lösemittel, Dispergator und Ähnlichem, bereitgestellt und als Folie gemeinsam mit dem als Folie bereitgestellten ersten Ausgangsmaterial dem Kalander zugeführt.

Gemäß einer vorteilhaften Weiterbildung des Verfahrens wird während des Verdichtens des mindestens einen Ausgangsmaterials Wärmeenergie von dem Kalander in das Ausgangsmaterial übertragen. Das mindestens eine Ausgangsmaterial wird somit während des Verdichtens erwärmt. Bei einer Erwärmung eines glasigen Ausgangsmaterials wie beispielsweise Li₂S-P₂S₅ oder eines polymeren lonenleiters wie beispielsweise PEO auf eine Temperatur oberhalb der Glastransformationstemperatur sinkt dessen Viskosität und die duktile Verformbarkeit wird verbessert. Dadurch ist die Verdichtung mit einem geringeren Druck möglich.

Gemäß einer weiteren vorteilhaften Weiterbildung des Verfahrens wird das Funktionselement nachfolgend, also nach Austritt aus dem Kalander, gesintert. Durch eine solche Sinterbehandlung kann das Funktionselement vorteilhaft weiter verdichtet werden. Das Sintern findet bevorzugt bei einer Temperatur knapp unterhalb des Schmelzpunkts des Ausgangsmaterials statt.

Es wird auch eine Vorrichtung zur Herstellung eines Funktionselements für eine Elektrodeneinheit einer Batteriezelle vorgeschlagen. Die Vorrichtung zur Herstellung des Funktionselements umfasst dabei einen Kalander mit mindestens zwei Walzen, welche bevorzugt gegenläufig rotieren. Das Ausgangsmaterial wird dann durch einen Walzvorgang zwischen den beiden rotierenden Walzen des Kalanders verdichtet.

Erfindungsgemäß ist mindestens ein Schallwellen- oder Ultraschallwellengenerator vorgesehen, der mit mindestens einer der Walzen in funktionaler Verbindung steht. Der Schallwellen- oder Ultraschallwellengenerator erzeugt dabei Schallwellen oder Ultraschallwellen, welche während des Verdichtens des Ausgangsmaterials von dem Kalander in das Ausgangsmaterial übertragen werden. Vorzugsweise erzeugt der Schallwellen- oder Ultraschallwellengenerator dabei Schallwellen oder Ultraschallwellen in einem Frequenzbereich zwischen 10 Hz und 1 GHz, besonders bevorzugt in einem Frequenzbereich zwischen 1 MHz und 200 MHz.

Gemäß einer vorteilhaften Ausgestaltung der Erfindung ist der mindestens eine Schallwellen- oder Ultraschallwellengenerator innerhalb einer der Walzen des Kalanders angeordnet.

Gemäß einer anderen vorteilhaften Ausgestaltung der Erfindung ist der mindestens eine Schallwellen- oder Ultraschallwellengenerator außerhalb der Walzen des Kalanders angeordnet.

### Vorteile der Erfindung

Durch das erfindungsgemäße Verfahren können Funktionselemente für Elektrodeneinheiten von Batteriezellen, insbesondere anodische Aktivmaterialschichten, kathodische Aktivmaterialschichten sowie Elektrolytschichten, hergestellt werden, welche stark verdichtet sind und nur eine geringe Porosität aufweisen. Dabei sind die durchschnittliche und die maximale Porengröße reduziert. Dadurch ist ein guter Kontakt der Bestandteile des Funktionselements, beispielsweise von Körnern, z.B. eines Aktivmaterials, und einer Matrixphase, beispielsweise einer ionenleitende Phase in einer kathodischen Aktivmaterialschicht oder einer anodischen Aktivmaterialschicht, sichergestellt. Somit ist der Transport von Elektronen und Ionen während des Betriebs der Elektrodeneinheit verbessert und der elektrische Widerstand sowie der ionische Widerstand sind reduziert. Kleine Poren in einem erfindungsgemäß verdichteten Material sind auch in einem nachfolgenden Sinterprozess einfacher zu entfernen als große Poren. Eine weitere Verdichtung eines Funktionselements beim Sintern mit geringerer Porosität und Porengröße erfordert somit einen geringeren Aufwand an Zeit und/oder eine geringere Sintertemperatur. Sintern in kürzerer Zeit und bei geringerer Temperatur reduziert die Gefahr von ungewünschten Reaktionen zwischen den Bestandteilen des Funktionselements. Auch ist die Homogenität des erfindungsgemäß hergestellten Funktionselements vorteilhaft erhöht. Damit ist die Gefahr des Vorhandenseins von Zonen mit geringerer Verdichtung innerhalb des Funktionselements vermindert. Solche Zonen können mechanische, elektrische oder elektrochemische Defekte oder Pfade für ein Wachstum von Lithium-Dendriten darstellen.

Ferner gestattet das Verfahren die Herstellung eines Funktionselements mit mehreren Schichten. Dabei wird auch ein guter und gleichmäßiger Kontakt zwischen den benachbarten Schichten erreicht. Dabei ist die Gefahr des Vorhandenseins von Poren oder Hohlräumen zwischen benachbarten Schichten des Funktionselements vermindert. Solche Poren oder Hohlräume können mechanische, elektrische oder elektrochemische Defekte sowie Ansatzpunkte oder Pfade für ein Wachstum von Dendriten darstellen. Vorteilhaft wird auch in Hohlräumen vorhandenes Gas, welches insbesondere in Hohlräumen zwischen pulverförmigem Ausgangsmaterial vorhanden ist, bei dem Walzvorgang entfernt. Dadurch ist die Gefahr einer Beschädigung oder einer Ausdehnung des Funktionselements durch einen internen Überdruck in gasgefüllten Hohlräumen, insbesondere bei einer Temperaturerhöhung, signifikant reduziert.

### Kurze Beschreibung der Zeichnungen

Ausführungsformen der Erfindung werden anhand der Zeichnungen und der nachfolgenden Beschreibung näher erläutert.

Es zeigen:
- Figur 1: eine schematische Darstellung einer Batteriezelle,
- Figur 2: eine schematische Schnittdarstellung einer Elektrodeneinheit und
- Figur 3: eine perspektivische Darstellung eines Kalanders.

Ausführungsformen der Erfindung

In der nachfolgenden Beschreibung der Ausführungsformen der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

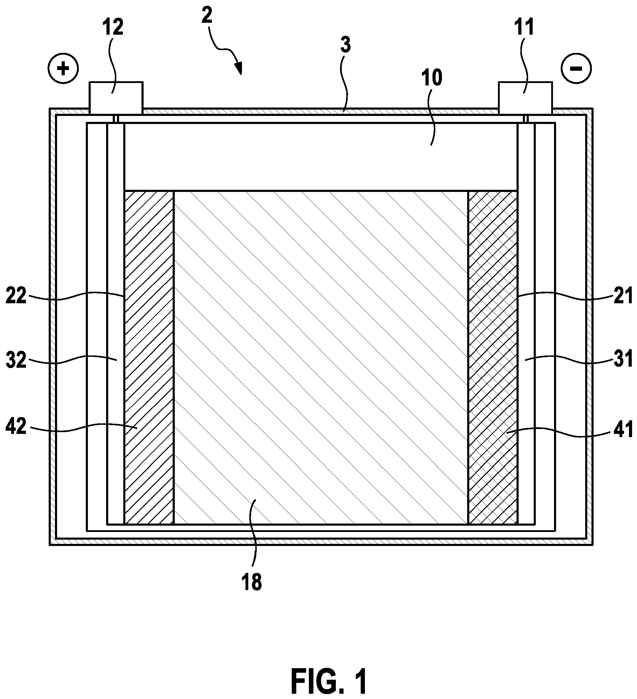

Figur 1 zeigt eine schematische Darstellung einer Batteriezelle 2. Die Batteriezelle 2 umfasst ein Zellengehäuse 3, welches prismatisch, vorliegend quaderförmig, ausgebildet ist. Das Zellengehäuse 3 ist vorliegend elektrisch leitend ausgeführt und beispielsweise aus Aluminium gefertigt. Das Zellengehäuse 3 kann aber auch aus einem elektrisch isolierenden Material, beispielsweise Kunststoff, gefertigt sein.

Die Batteriezelle 2 umfasst ein negatives Terminal 11 und ein positives Terminal 12. Über die Terminals 11, 12 kann eine von der Batteriezelle 2 zur Verfügung gestellte Spannung abgegriffen werden. Ferner kann die Batteriezelle 2 über die Terminals 11, 12 auch geladen werden.

Innerhalb des Zellengehäuses 3 der Batteriezelle 2 ist eine Elektrodeneinheit 10 angeordnet, welche beispielsweise als Elektrodenstapel oder als Elektrodenwickel ausgeführt ist. Die Elektrodeneinheit 10 weist zwei Elektroden, nämlich eine Anode 21 und eine Kathode 22, auf. Die Anode 21 und die Kathode 22 sind jeweils flächig ausgeführt und durch einen Separator 18 voneinander separiert. Der Separator 18 ist ebenfalls flächig ausgeführt und ionisch leitfähig, also für Lithiumionen durchlässig.

Die Anode 21 umfasst eine anodische Aktivmaterialschicht 41 und einen Stromableiter 31. Der Stromableiter 31 der Anode 21 ist elektrisch leitfähig ausgeführt und aus einem Metall gefertigt, beispielsweise aus Kupfer. Der Stromableiter 31 der Anode 21 ist elektrisch mit dem negativen Terminal 11 der Batteriezelle 2 verbunden.

Die Kathode 22 umfasst eine kathodische Aktivmaterialschicht 42 und einen Stromableiter 32. Der Stromableiter 32 der Kathode 22 ist elektrisch leitfähig ausgeführt und aus einem Metall gefertigt, beispielsweise aus Aluminium. Der Stromableiter 32 der Kathode 22 ist elektrisch mit dem positiven Terminal 12 der Batteriezelle 2 verbunden.

In der kathodischen Aktivmaterialschicht 42 der Elektrodeneinheit 10 sind Lithiumatome eingelagert. Bei einem Ladevorgang der Elektrodeneinheit 10 in der Batteriezelle 2 wandern Lithiumionen von der kathodischen Aktivmaterialschicht 42 durch den Separator 18 zu der anodischen Aktivmaterialschicht 41. Dabei werden die Lithiumionen in der anodischen Aktivmaterialschicht 41 eingelagert. Dieser Vorgang wird auch als Lithiierung bezeichnet. Gleichzeitig fließen Elektronen in einem äußeren Stromkreis von der Kathode 22 zu der Anode 21.

Beim Betrieb der Batteriezelle 2, also bei einem Entladevorgang der Elektrodeneinheit 10, fließen Elektronen in einem äußeren Stromkreis von der Anode 21 zu der Kathode 22. Innerhalb der Elektrodeneinheit 10 wandern Lithiumionen von der anodischen Aktivmaterialschicht 41 durch den Separator 18 zu der kathodischen Aktivmaterialschicht 42. Dabei lagern die Lithiumionen aus der anodischen Aktivmaterialschicht 41 reversibel aus, was auch als Delithiierung bezeichnet wird.

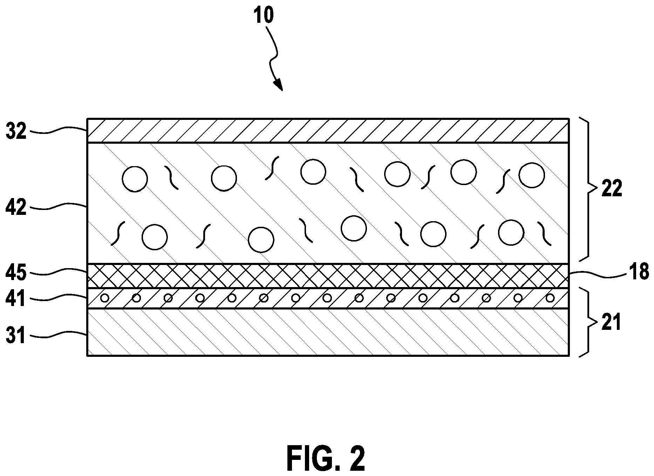

Figur 2 zeigt eine schematische Schnittdarstellung der Elektrodeneinheit 10 der in Figur 1 dargestellten Batteriezelle 2. Die Elektrodeneinheit 10 umfasst vorliegend in dieser Reihenfolge einen Stromableiter 32 der Kathode 22, eine kathodische Aktivmaterialschicht 42, eine Elektrolytschicht 45, eine anodische Aktivmaterialschicht 41 und einen Stromableiter 31 der Anode 21. Die Elektrolytschicht 45 bildet dabei den Separator 18 der Elektrodeneinheit 10 der Batteriezelle 2.

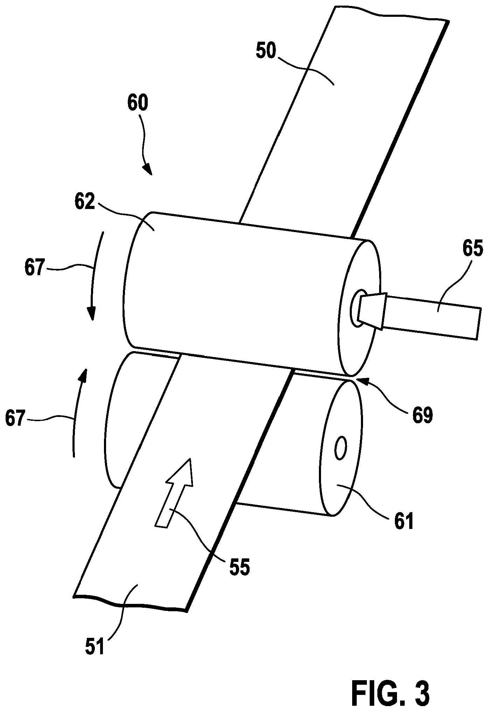

Figur 3 zeigt eine perspektivische Darstellung eines Kalanders 60 einer Vorrichtung zur Herstellung eines Funktionselements 50. Der Kalander 60 weist vorliegend eine erste Walze 61 und eine zweite Walze 62 auf, welche jeweils in eine Umlaufrichtung 67 gegenläufig rotieren. Zwischen den Walzen 61, 62 ist ein Spalt 69 gebildet.

Ein Schallwellen- oder Ultraschallwellengenerator 65 ist außerhalb der beiden Walzen 61, 62 angeordnet. Der Schallwellen- oder Ultraschallwellengenerator 65 steht vorliegend mit der zweiten Walze 62 in funktionaler Verbindung. Der Schallwellen- oder Ultraschallwellengenerator 65 erzeugt dabei Schallwellen oder Ultraschallwellen, welche auf die zweite Walze 62 des Kalanders 60 übertragen werden.

Ein weiterer, hier verdeckter Schallwellen- oder Ultraschallwellengenerator 65 ist vorliegend innerhalb der ersten Walze 61 angeordnet und steht mit der ersten Walze 61 in funktionaler Verbindung. Der innerhalb der ersten Walze 61 angeordnete Schallwellen- oder Ultraschallwellengenerator 65 erzeugt dabei Schallwellen oder Ultraschallwellen, welche auf die erste Walze 61 des Kalanders 60 übertragen werden.

Ein Ausgangsmaterial 51 wird vorliegend als Folie bereitgestellt und als Folie dem Kalander 60 zugeführt. Dabei wird das Ausgangsmaterial 51 in einer Zuführrichtung 55 in den Spalt 69 zwischen den Walzen 61, 62 des Kalanders 60 eingeführt. Das Ausgangsmaterial 51 wird anschließend durch einen Walzvorgang zwischen den beiden rotierenden Walzen 61, 62 des Kalanders 60 verdichtet.

Das Ausgangsmaterial 51 kann auch beispielsweise als Pulver bereitgestellt und als Pulver dem Kalander 60 zugeführt werden. In diesem Fall kann eine Trägerfolie oder ein Trägersubstrat vorgesehen sein, auf welches das als Pulver vorliegende Ausgangsmaterial 51 aufgebracht wird.

Neben dem Ausgangsmaterial 51, welches im Folgenden auch als erstes Ausgangsmaterial 51 bezeichnet wird, kann ein weiteres Ausgangsmaterial bereitgestellt dem Kalander 60 zugeführt werden. Das weitere Ausgangsmaterial wird dabei auf das als Folie bereitgestellte erste Ausgangsmaterial 51 aufgebracht und gemeinsam mit dem ersten Ausgangsmaterial 51 dem Kalander 60 zugeführt. Dabei werden das erste Ausgangsmaterial 51 und das weitere Ausgangsmaterial durch einen Walzvorgang zwischen den beiden rotierenden Walzen 61, 62 des Kalanders 60 verdichtet.

Das weitere Ausgangsmaterial kann beispielsweise als Pulver bereitgestellt und als Pulver gemeinsam mit dem als Folie bereitgestellten ersten Ausgangsmaterial 51 dem Kalander 60 zugeführt werden. Das weitere Ausgangsmaterial kann beispielsweise auch als Folie bereitgestellt und als Folie gemeinsam mit dem als Folie bereitgestellten ersten Ausgangsmaterial 51 dem Kalander 60 zugeführt werden.

Während des Verdichtens des Ausgangsmaterials 51 und gegebenenfalls des weiteren Ausgangsmaterials werden Schallwellen oder Ultraschallwellen von dem Kalander 60 in das Ausgangsmaterial 51 und gegebenenfalls in das weitere Ausgangsmaterial übertragen. Die Schallwellen oder Ultraschallwellen werden dabei von den beiden Schallwellen- oder Ultraschallwellengeneratoren 65 erzeugt, welche mit den beiden Walzen 61, 62 des Kalanders 60 in funktionaler Verbindung stehen.

Optional kann Wärmeenergie von dem Kalander 60, insbesondere von den Walzen 61, 62 des Kalanders 60, in das Ausgangsmaterial 51 und gegebenenfalls in das weitere Ausgangsmaterial übertragen werden, so dass das Ausgangsmaterial 51 und gegebenenfalls das weitere Ausgangsmaterial während des Verdichtens in dem Kalander 60 erwärmt werden. In diesem Fall sind an den Walzen 61, 62 entsprechende hier nicht dargestellte Heizeinrichtungen vorgesehen.

Durch das Verdichten des Ausgangsmaterials 51 und gegebenenfalls des weiteren Ausgangsmaterials unter gleichzeitiger Einwirkung von Schallwellen oder Ultraschallwellen in dem Kalander 60 entsteht das Funktionselement 50. Das Funktionselement 50 tritt dabei aus dem Spalt 69 zwischen den Walzen 61, 62 des Kalanders 60 aus.

Das Funktionselement 50 umfasst eine einzige Schicht, wenn nur das erste Ausgangsmaterial 51 dem Kalander 60 zugeführt wird. Beispielsweise handelt es sich bei dem Funktionselement 50 um eine anodische Aktivmaterialschicht 41. Bei dem Funktionselement 50 kann es sich auch um eine kathodische Aktivmaterialschicht 42 handeln. Ferner kann es sich bei dem Funktionselement 50 um eine Elektrolytschicht 45 handeln.

Das Funktionselement 50 umfasst mehrere unterschiedliche Schichten, wenn das erste Ausgangsmaterial 51 und das weitere Ausgangsmaterial dem Kalander 60 zugeführt werden. Beispielsweise kann das Funktionselement 50 eine anodische Aktivmaterialschicht 41 und eine Elektrolytschicht 45 umfassen. Ebenso kann das Funktionselement 50 eine kathodische Aktivmaterialschicht 42 und eine Elektrolytschicht 45 umfassen.

Nach dem Austritt aus dem Kalander 60 kann das hergestellte Funktionselement 50 zusätzlich noch gesintert werden. Durch das nachfolgende Sintern wird das Funktionselement 50 dabei noch weiter verdichtet.

Die Erfindung ist nicht auf die hier beschriebenen Ausführungsbeispiele und die darin hervorgehobenen Aspekte beschränkt. Vielmehr ist innerhalb des durch die Ansprüche angegebenen Bereichs eine Vielzahl von Abwandlungen möglich, die im Rahmen fachmännischen Handelns liegen.

## Patentansprüche

1. Verfahren zur Herstellung eines Funktionselements (50) für eine Elektrodeneinheit (10) einer Batteriezelle (2), wobei mindestens ein Ausgangsmaterial (51) bereitgestellt wird, und
das Ausgangsmaterial (51) in einem Kalander (60) verdichtet wird, und wobei während des Verdichtens Schallwellen oder Ultraschallwellen von dem Kalander (60) in das Ausgangsmaterial (51) übertragen werden.

2. Verfahren nach Anspruch 1, wobei
das mindestens eine Ausgangsmaterial (51) als Pulver bereitgestellt wird.

3. Verfahren nach Anspruch 1, wobei
das mindestens eine Ausgangsmaterial (51) als Folie bereitgestellt wird.

4. Verfahren nach Anspruch 3, wobei
mindestens ein weiteres Ausgangsmaterial bereitgestellt wird, wobei das Ausgangsmaterial (51) und das weitere Ausgangsmaterial in dem Kalander (60) derart verdichtet werden, dass
das Funktionselement (50) mindestens zwei unterschiedliche Schichten (41, 42, 45) aufweist.

5. Verfahren nach Anspruch 4, wobei
das mindestens eine weitere Ausgangsmaterial als Pulver bereitgestellt wird.

6. Verfahren nach Anspruch 4, wobei
das mindestens eine weitere Ausgangsmaterial als Folie bereitgestellt wird.

7. Verfahren nach einem der vorstehenden Ansprüche, wobei während des Verdichtens Wärmeenergie von dem Kalander (60) in das Ausgangsmaterial (51) übertragen wird.

8. Verfahren nach einem der vorstehenden Ansprüche, wobei das Funktionselement (50) nachfolgend gesintert wird.

## Claims

1. Method for producing a functional element (50) for an electrode unit (10) of a battery cell (2), wherein at least one starting material (51) is provided, and the starting material (51) is compressed in a calender (60), and wherein, during the compressing, sound waves or ultrasonic waves are transferred from the calender (60) into the starting material (51).

2. Method according to Claim 1, wherein
the at least one starting material (51) is provided as powder.

3. Method according to Claim 1, wherein
the at least one starting material (51) is provided as sheeting.

4. Method according to Claim 3, wherein
at least one further starting material is provided, wherein the starting material (51) and the further starting material are compressed in the calender (60) in such a way that
the functional element (50) has at least two different layers (41, 42, 45).

5. Method according to Claim 4, wherein
the at least one further starting material is provided as powder.

6. Method according to Claim 4, wherein
the at least one further starting material is provided as sheeting.

7. Method according to one of the preceding claims, wherein
during the compressing, thermal energy is transferred from the calender (60) into the starting material (51) .

8. Method according to one of the preceding claims, wherein
the functional element (50) is subsequently sintered.

## Revendications

1. Procédé de fabrication d'un élément fonctionnel (50) pour une unité d'électrode (10) d'une cellule de batterie (2), dans lequel au moins un matériau de base (51) est fourni, et le matériau de base (51) est compacté dans une calandre (60), et dans lequel, pendant le compactage, des ondes sonores ou des ondes ultrasonores sont transmises par la calandre (60) dans le matériau de base (51).

2. Procédé selon la revendication 1, dans lequel ledit au moins un matériau de base (51) est fourni sous forme de poudre.

3. Procédé selon la revendication 1, dans lequel ledit au moins un matériau de base (51) est fourni sous forme de pellicule.

4. Procédé selon la revendication 3, dans lequel au moins un autre matériau de base est fourni, le matériau de base (51) et l'autre matériau de base étant compactés dans la calandre (60) de telle sorte que l'élément fonctionnel (50) présente au moins deux couches (41, 42, 45) différentes.

5. Procédé selon la revendication 4, dans lequel ledit au moins un autre matériau de base est fourni sous forme de poudre.

6. Procédé selon la revendication 4, dans lequel ledit au moins un autre matériau de base est fourni sous forme de pellicule.

7. Procédé selon l'une quelconque des revendications précédentes, dans lequel, pendant le compactage, de l'énergie thermique est transmise par la calandre (60) dans le matériau de base (51).

8. Procédé selon l'une quelconque des revendications précédentes, dans lequel l'élément fonctionnel (50) est ensuite fritté.
